(19) Europäisches Patentamt
European Patent Office
Office européen des brevets

(11) **EP 1 166 494 B1**

(12) **FASCICULE DE BREVET EUROPEEN**

(45) Date de publication et mention
de la délivrance du brevet:
**24.06.2009 Bulletin 2009/26**

(21) Numéro de dépôt: **00910928.1**

(22) Date de dépôt: **13.03.2000**

(51) Int Cl.:
*H04L 9/30* (2006.01)       *G06F 7/72* (2006.01)

(86) Numéro de dépôt international:
**PCT/FR2000/000603**

(87) Numéro de publication internationale:
**WO 2000/059156 (05.10.2000 Gazette 2000/40)**

(54) **PROCEDES DE CONTRE-MESURE DANS UN COMPOSANT ELECTRONIQUE METTANT EN OEUVRE UN ALGORITHME DE CRYPTOGRAPHIE A CLE PUBLIQUE DE TYPE COURBE ELLIPTIQUE**

GEGENMASSNAHMEN IN EINEM ELEKTRONISCHEN BAUSTEIN ZUR AUSFÜHRUNG EINES KRYPTO-ALGORITHMUS MIT AUF ELLIPTISCHEN KURVEN BASIERENDEM ÖFFENTLICHEM SCHLÜSSEL

COUNTERMEASURE PROCEDURES IN AN ELECTRONIC COMPONENT IMPLEMENTING AN ELLIPTICAL CURVE TYPE PUBLIC KEY ENCRYPTION ALGORITHM

(84) Etats contractants désignés:
**AT BE CH CY DE DK ES FI FR GB GR IE IT LI LU MC NL PT SE**

(30) Priorité: **26.03.1999 FR 9903921**

(43) Date de publication de la demande:
**02.01.2002 Bulletin 2002/01**

(73) Titulaire: **Gemalto SA**
**92190 Meudon (FR)**

(72) Inventeur: **CORON, Jean-Sébastien**
**F-75015 Paris (FR)**

(56) Documents cités:
• **MENEZES A J ET AL: "ELLIPTIC CURVE CRYPTOSYSTEMS AND THEIR IMPLEMENTATION" JOURNAL OF CRYPTOLOGY,US,NEW YORK, NY, vol. 6, no. 4, septembre 1993 (1993-09), pages 209-224, XP002069135**

## Description

La présente invention concerne un procédé de contre-mesure dans un composant électronique mettant en oeuvre un algorithme de chiffrement à clé publique de type courbe elliptique.

Dans le modèle classique de la cryptographie à clef secrète, deux personnes désirant communiquer par l'intermédiaire d'un canal non sécurisé doivent au préalable se mettre d'accord sur une clé secrète de chiffrement K. La fonction de chiffrement et la fonction de déchiffrement utilisent la même clef K. L'inconvénient du système de chiffrement à clé secrète est que ledit système requiert la communication préalable de la clé K entre les deux personnes par l'intermédiaire d'un canal sécurisé, avant qu'un quelconque message chiffré ne soit envoyé à travers le canal non sécurisé. Dans la pratique, il est généralement difficile de trouver un canal de communication parfaitement sécurisé, surtout si la distance séparant les deux personnes est importante. On entend par canal sécurisé un canal pour lequel il est impossible de connaître ou de modifier les informations qui transitent par ledit canal. Un tel canal sécurisé peut être réalisé par un câble reliant deux terminaux, possédés par les deux dites personnes.

Le concept de cryptographie à clef publique fut inventé par Whitfield DIFFIE et Martin HELLMAN en 1976. La cryptographie à clef publique permet de résoudre le problème de la distribution des clefs à travers un canal non sécurisé. Le principe de la cryptographie à clef publique consiste à utiliser une paire de clefs, une clef publique de chiffrement et une clef privée de déchiffrement. Il doit être calculatoirement infaisable de trouver la clef privée de déchiffrement à partir de la clef publique de chiffrement. Une personne A désirant communiquer une information à une personne B utilise la clef publique de chiffrement de la personne B. Seule la personne B possède la clef privée associée à sa clef publique. Seule la personne B est donc capable de déchiffrer le message qui lui est adressé.

Un autre avantage de la cryptographie à clé publique sur la cryptographie à clé secrète est que la cryptographie à clef publique permet l'authentification par l'utilisation de signature électronique.

La première réalisation de schéma de chiffrement à clef publique fut mis au point en 1977 par Rivest, Shamir et Adleman, qui ont inventé le système de chiffrement RSA. La sécurité de RSA repose sur la difficulté de factoriser un grand nombre qui est le produit de deux nombres premiers.

Depuis, de nombreux systèmes de chiffrement à clef publique ont été proposés, dont la sécurité repose sur différents problèmes calculatoires : (cette liste n'est pas exhaustive).

- Sac à dos de Merckle-Hellman :
  Ce système de chiffrement est basé sur la difficulté du problème de la somme de sous-ensembles.
- McEliece :
  Ce système de chiffrement est basé sur la théorie des codes algébriques. Il est basé sur le problème du décodage de codes linéaires.
- ElGamal :
  Ce système de chiffrement est basé sur la difficulté du logarithme discret dans un corps fini.
- Courbes elliptiques :
  Le système de chiffrement à courbe elliptique constitue une modification de systèmes cryptographiques existant pour les appliquer au domaine des courbes elliptiques.

L'utilisation de courbes elliptiques dans des systèmes cryptographiques fut proposé indépendamment par Victor Miller et Neal Koblitz en 1985. Les applications réelles des courbes elliptiques ont été envisagées au début des années 1990.

L'avantage de cryptosystèmes à base de courbe elliptique est qu'ils fournissent une sécurité équivalente aux autres cryptosystèmes mais avec des tailles de clef moindres. Ce gain en taille de clé implique une diminution des besoins en mémoire et une réduction des temps de calcul, ce qui rend l'utilisation des courbes elliptiques particulièrement adaptées pour des applications de type carte à puce.

Une courbe elliptique sur un corps fini GF(q^n) (q étant un nombre premier et n un entier) est l'ensemble des points (x,y) avec x l'abscisse et y l'ordonnée appartenant à GF(q^n) solution de l'équation :

$$y \wedge 2 = x \wedge 3 + a * x + b$$

si q est supérieur ou égal à 3
et

$$y \hat{} 2 + x * y = x \wedge 3 + a * x \wedge 2 + b$$

si q=2.

Il existe 2 procédés pour représenter un point d'une courbe elliptique :

Premièrement, la représentation en coordonnées affine; dans ce procédé, un point P de la courbe elliptique est représenté par ses coordonnées (x,y).
Deuxièment, la représentation en coordonnées projectives.

L'avantage de la représentation en coordonnées projectives est qu'elle permet d'éviter les divisions dans le corps fini, lesdites divisions étant les opérations les plus coûteuses en temps de calcul.

La représentation: en coordonnés projectives le plus couramment utilisée est celle consistant à représenter un point P de la courbe elliptique par les coordonnées (X, Y, Z), telles que x=X/Z^2 et y=Y/Z^3.
Les coordonnées projectives d'un point ne sont pas uniques parce que le triplet (X,Y,Z) et le triplet (λ^2*X, λ^3*Y, λ*Z) représentent le même
point quelque soit l'élément λ appartenant au corps fini sur lequel est défini la courbe elliptique.

Les 2 classes de courbes les plus utilisées en cryptographie sont les suivantes :

1) Courbes définies sur le corps fini GF(p) (ensemble des entiers modulo p, p étant un nombre premier) ayant pour équation

$$y^2 = x^3 + a*x + b$$

2) Courbes définies sur le corps fini GF(2^n) ayant pour équation

$$y^2 + x*y = x^3 + a*x^2 + b$$

Pour chacune de ces deux classes de courbes, on définit les opérations d'addition de point et de doublement de point.
L'addition de point est l'opération qui étant donné deux points P et Q calcule la somme R=P+Q, R étant un point de la courbe dont les coordonnées s'expriment à l'aide des coordonnées des points P et Q suivant des formules dont l'expression est donnée dans l'ouvrage

Elliptic curve public key cryptosystem" par Alfred J. Menezes.
Le doublement de point est l'opération qui, étant donné un point P, calcule le point R=2*P, R étant un point de la courbe dont les coordonnées s'expriment à l'aide des coordonnées du point P suivant des formules dont l'expression est donnée dans l'ouvrage " Elliptic curve public key cryptosystem " par Alfred J. Menezes.

Les opérations d'addition de point et de doublement de point permettent de définir une opération de multiplication scalaire : étant donné un point P appartenant à une courbe elliptique et un entier d, le résultat de la multiplication scalaire de P par d est le point Q tel que Q=d*P=P+P+...+P d fois.

La sécurité des algorithmes de cryptographie sur courbes elliptiques est basée sur la difficulté du problème du logarithme discret sur courbes elliptiques, ledit problème consistant à partir de deux points Q et P appartenant à une courbe elliptique E, de trouver, s'il existe, un entier x tel que Q=x*P

Il existe de nombreux algorithmes cryptographiques basés sur le problème du logarithme discret. Ces algorithmes sont facilement transposables aux courbes elliptiques.

Ainsi, il est possible de mettre en oeuvre des algorithmes assurant l'authentification, la confidentialité, le contrôle d'intégrité et l'échange de clé.

Un point commun à la plupart des algorithmes cryptographiques basés sur les courbes elliptiques est qu'ils comprennent comme paramètre une courbe elliptique définie sur un corps fini et un point P appartenant à cette courbe elliptique. La clé privée est un entier d choisi aléatoirement. La clef publique est un point de la courbe Q tel que Q=d*P.
Ces algorithmes cryptographiques font généralement intervenir une multiplication scalaire dans le calcul d'un point R=d*T où d est la clef secrète.

Dans le paragraphe ci dessous, on décrit un algorithme de chiffrement à base de courbe elliptique. Ce schéma est analogue au schéma de chiffrement d'El Gamal. Un message m est chiffré de la manière suivante :

Le chiffreur choisit un entier k aléatoirement et calcule les points k* P= (x1, y1) et k*Q= (x2, y2) de la courbe, et l'entier c= x2 + m. Le chiffré de m est le triplet (x1, y1,c) .
Le déchiffreur qui possède d déchiffre m en calculait :

$$(x'2,y'2)=d(x1,y1) \quad et \quad m=c-x'2$$

Pour réaliser les multiplications scalaires nécessaires dans les procédés de calcul décrits précédemment., plusieurs algorithmes existant

- Algorithme " double and add " ;
- Algorithme " addition-soustraction "
- Algorithme avec chaines d'addition ;
- Algorithme avec fenêtre ;
- Algorithme avec représentation signée.

Cette liste n'est pas exhaustive. L'algorithme le plus simple et le plus utilisé est l'algorithme " double and add ". L'algorithme " double and add " prend en entrée un point P appartenant à une courbe elliptique donnée et un entier d. L' entier d est noté d= (d (t), d (t-1), ..., d(0)), où (d(t),d(t-1),...,d(0)) est la représentation binaire de d, avec d(t) le bit de poids fort et d(0) le bit de poids faible. L'algorithme retourne en sortie le point Q=d.P.

L'algorithme " double and add " comporte les 3 étapes suivante :

1) Initialiser le point Q avec la valeur P
2) Pour i allant de t-1 à 0 exécuter :
2a) Remplacer Q par 2Q
2b) Si. d(i)=1 remplacer Q par Q+P
3) Retourner Q.

Il est apparu que l'implémentation sur carte à puce d'un algorithme de chiffrement à clé publique du type courbe elliptique était vulnérable à des attaques consistant en une analyse différentielle de consommation de courant permettant de retrouver la clé privée de déchiffrement. Ces attaques sont appelées attaques DPA, acronyme pour Differential Power Analysis. Le principe de ces attaques DPA repose sur le fait que la consommation de courant du microprocesseur exécutant des instructions varie selon.la donnée manipulée.

En particulier, lorsqu'une instructio.n manipule une donnée dont un bit particulier est constant, la valeur des autres bits pouvant varier, l'analyse de la consommation de courant liée à l'instruction montre que la consommation moyenne de l'instruction n'est pas la même suivant que le bit particulier prend la valeur 0 ou 1. L'attaque de type DPA permet donc d'obtenir des informations supplémentaire sur les données intermédiaires manipulées par le microprocesseur de la carte lors de l'exécution d'un algorithme cryptographique. Ces informations supplémentaires peuvent dans certain cas permettre de révéler les paramètres privés de l'algorithme de déchiffrement, rendant le système cryptographique non sûr.

Dans la suite de ce document on décrit un procédé d'attaque DPA sur un algorithme de type courbe elliptique réalisant une opération du type multiplication scalaire d'un point P par un entier d, l'entier d étant la clé secrète. Cette attaque permet de révéler directement la clé secrète d. Elle compromet donc gravement la sécurité de l'implémentation de courbes elliptiques sur une carte à puce.

La première étape de l'attaque est l'enregistrement de la consommation de courant correspondant à l'exécution de l'algorithme " double and add " décrit précédemment pour N points distincts P(1), ..., P(N). Dans un algorithme à base de courbes elliptiques, le microprocesseur de la carte à puce va effectuer N multiplications scalaires d. P(1), ..., d. P(N).

Pour la clarté de la description de l'attaque, on commence par décrire une méthode permettant d'obtenir la valeur du bit d(t-1) de la clé secrète d, où (d(t), d(t-1),..., d(0)) est la représentation binaire de d, avec d(t) le bit de poids fort et d(0) le bit de poids faible. On donne ensuite la description d'un algorithme qui permet de retrouver la valeur de d.

On groupe les points P(1) à P(N) suivant la valeur du dernier bit de l'abscisse de 4.P, où P désigne un des points P(1) à P(N). Le premier groupe est constitué des points P tels que le dernier bit de l'abscisse de 4.P est égal à 1.

Le second groupe est constitué des points P tels que le dernier bit de l'abscisse de 4.P est égal à 0. On calcule la moyenne des consommations de courant correspondant à chacun des deux groupes, et on calcule la courbe de différence entre ces deux moyennes.

Si le bit d(t-1) de d est égal à 0, alors l'algorithme de multiplication scalaire précédemment décrit calcule et met en mémoire la valeur de 4.P. Cela signifie que lors de l'exécution de l'algorithme dans une carte à puce, le microprocesseur de la carte va effectivement calculer 4.P. Dans ce cas, dans le premier groupe de message le dernier bit de la donnée manipulée par le microprocesseur est toujours à 1, et dans le deuxième groupe de message le dernier bit de la donnée manipulée est toujours à 0. La moyenne des consommations de courant correspondant à chaque groupe est donc différente. Il apparaît donc dans la courbe de différence entre les 2 moyennes un pic de différentiel de consommation de courant.

Si au contraire le bit d(t-1) de d est égal à 1, l'algorithme d'exponentiation décrit précédemment ne calcule pas le point 4.P. Lors de l'exécution de l'algorithme par la carte à puce, le microprocesseur ne manipule donc jamais la donnée 4.P. Il n'apparaît donc pas de pic de différentiel de consommation.

Cette méthode permet donc de déterminer la valeur du bit d(t-1) de d.

L'algorithme décrit dans le paragraphe suivant est une généralisation de l'algorithme précédant. Il permet de déterminer la valeur de la clé secrète d.

On définit l'entrée par N points notés P(1) à P(N) correspondant à N calculs réalisés par la carte à puce et la sortie par un entier h.

Ledit algorithme s'effectue de la manière suivante en trois étapes.

1) Exécuter h=1 ;
2) Pour i allant de t-1 à 1, exécuter :
2)1)Classer les points P(1) à P(N) suivant la valeur du dernier bit de l'abscisse de (4*h).P ;
2)2)Calculer la moyenne de consommation de courant pour chacun des deux groupes ;
2)3)Calculer la différence entre les 2 moyennes ;
2)4) Si la différence fait apparaître un pic de différentiel de consommation, faire h=h*2 ; sinon faire h=h*2+1 ;
3) Retourner h.

L'algorithme précédent fournit un entier h tel que d=2*h ou d=2*h+1. Pour obtenir la valeur de d, il suffit ensuite de tester les deux hypothèses possibles.

L'attaque de type DPA décrite permet donc de retrouver la clé privée d.

Le procédé de l'invention consiste en l'élaboration d'une contre mesure permettant de se prémunir contre l'attaque DPA décrite précédemment. Cette contre mesure utilise la représentation des points de la courbe elliptique en coordonnées projectives.

Comme il a été expliqué précédemment, le représentant d'un point en coordonnées projectives n'est pas unique. Si le corps fini sur lequel est défini la courbe elliptique comprend n élements, il est possible de choisir un représentant parmi n-1 possibles.

En choisissant un représentant aléatoire d'un point sur lequel on effectue un calcul, les valeurs intermédiaires du calcul deviennent elles-mêmes aléatoires et donc imprévisibles de l'extérieur, ce qui rend l'attaque DPA précédemment décrite impossible.

Le document « Elliptic curve cryptosystems and their implementation", Journal of cryptology, US, New-York, NY, vol.6, no.4, septembre 1993 (1993-09), pages 209-224, XP002069135, décrit un procédé de contre mesure mettant en oeuvre un algorithme de cryptographie à clé publique de type courbe elliptique en utilisant la représentation des points de la courbe elliptique en coordonnées projectives.

Le procédé de la contre mesure selon l'invention consiste en une modification des opérations d'addition de point et de doublement de point de courbe elliptiques définies sur les corps finis GF(p) pour p premier et GF(2^n). La modification des opérations d'addition de point et de doublement de point de courbes elliptiques définies sur les corps finis GF(p) pour p premier et GF(2^n) s'applique quelque soit l'algorithme utilisé pour réaliser ces opérations.

Le procédé de la contre mesure consiste également en la définition de 4 variantes dans l'opération de multiplication scalaire. Ces 4 variantes s'appliquent quelque soit l'algorithme utilisé pour réaliser l'opération de multiplication scalaire.

Dans ce paragraphe, on décrit la modification de l'algorithme de doublement de point d'une courbe elliptique définie sur le corps fini GF(p), où p est un nombre premier. La courbe elliptique est donc définie par l'équation suivante :

$$y\,\char`\^\,2 = x\,\char`\^\,3 + a * x + b$$

où a et b sont des paramètres entiers fixés au départ.

Les coordonnées projectives du point Q=(X2,Y2,Z2) tel que Q=2.P avec P=(X1,Y1,Z1) sont calculées par le procédé suivant en 6 étapes. Dans chacune des étapes, les calculs sont effectués modulo p.

1) Calculer $M=3*X1^2+a*Zl^4$;
2) Calculer $Z2=2*Y1*Z1$;
3) Calculer $S=4*X1*Y1^2$;

4) Calculer X2=M^2-2*S;
5) Calculer T=8*Y1^4;
6) Calculer Y2=M*(S-X2)-T.

Le procédé de la contre mesure consiste en une modification du procédé précédent.
Le nouveau procédé de doublement de point d'une courbe elliptique définie sur le corps fini GF(p) consiste en les 8 étapes suivantes :

1) Tirer au hasard un entier $\lambda$ tel que $0<\lambda<p$;
2) Calculer X'1=$\lambda$^2*X1, Y'1=$\lambda$^3*Y1 et Z'1=$\lambda$*Z1;
3) Calculer M=3*X'1^2+a*Z'1^4;
4) Calculer Z2=2*Y'1*Z'1;
5) Calculer S=4*X'1*Y'1^2;
6) Calculer X2=M^2-2*S;
7) Calculer T=8*Y'1^4;
8) Calculer Y2=M*(S-X2)-T.

Plus généralement, le procédé de la contre mesure s'applique quelque soit le procédé (noté par la suite A) utilisé pour réaliser l'opération de doublement de point. Le procédé A est remplacé par le procédé A' en 3 étapes :
Entrée : un point P=(X1,Y1,Z1) représenté en coordonnées projectives.
Sortie : une point Q=(X2,Y2,Z2) représenté en coordonnés projectives tel que Q=2.P

1) Tirer au hasard un entier $\lambda$ tel que $0<\lambda<p$;
2) Calculer X'1=$\lambda$^2*X1, Y'1=$\lambda$^3*Y1 et Z'1=$\lambda$*Z1,
X'1, Y'1 et Z'1 définissant les coordonnées du point P'=(X'1,Y'1,Z'1);
3) Calculer Q=2*P' à l'aide de l'algorithme A.

Les variables manipulées au cours de l'exécution du procédé A' étant aléatoire, l'attaque DPA précédemment décrite ne s'applique plus.
Dans ce paragraphe, on décrit la modification de l'algorithme d'addition de point d'une courbe elliptique définie sur le corps fini GF(p), où p est un nombre premier.
Les coordonnées projectives du point R=(X2,Y2,Z2) tel que R=P+Q avec P= (X0,Y0,Z0) et Q=(X1,Y1,Z1) sont calculées par le procédé suivant en 12 étapes. Dans chacune des étapes, les calculs sont effectués modulo p.

1) Calculer U0=X0*Z1^2;
2) Calculer S0=Y0*Z1^3;
3) Calculer U1=X1*Z0^2;
4) Calculer S1=Y1*Z0^3;
5) Calculer W=U0-U1;
6) Calculer R=S0-S1;
7) Calculer T=U0+U1;
8) Calculer M=S0+S1;
9) Calculer Z2=Z0*Z1*W;
10) Calculer X2=R^2-T*W^2;
11) Calculer V=T*W^2-2*X2;
12) Calculer 2*Y2=V*R-M*W^3.

Le procédé de la contre mesure consiste en une modification du procédé précédent. Le nouveau procédé d'addition de point d'une courbe elliptique définie sur le corps fini GF(p) consiste en les 16 étapes suivante :

1) Tirer au hasard un entier $\lambda$ tel que $0<\lambda<p$;
2) Remplacer X0 par $\lambda$^2*X0, Y0 par X^3*Y0 et Z0 par $\lambda$*Z0;
3) Tirer au hasard un entier $\mu$ tel que $0<\mu<p$;
4) Remplacer X1 par $\mu$^2*X1, Y1 par $\mu$^3*Y1 et Z1 par $\mu$*Z1;
5) Calculer U0=X0*Z1^2;
6) Calculer S0=Y0*Z1^3;
7) Calculer U1=X1*Z0^2;
8) Calculer S1=Y1*Z0^3;

9) Calculer W=U0-U1;
10) Calculer R=S0-S1;
11) Calculer T=U0+U1;
12) Calculer M=S0+S1;
13) Calculer Z2=Z0*Z1*W;
14) Calculer X2=R^2-T*W^2;
15) Calculer V=T*W^2-2*X2;
16) Calculer 2*Y2=V*R-M*W^3.

Plus généralement, le procédé de la contre mesure s'applique quelque soit le procédé (noté par la suite A) utilisé pour réaliser l'opération d'addition de point. Le procédé A est remplacé par le procédé A' en 5 étapes :
Entrée : deux points P=(X0,Y0,Z0) et Q=(X1,Y1,Z1) représentés en coordonnées projectives.
Sortie : le point R=(X2,Y2,Z2) représenté en coordonnés projectives tel que R=P+Q

1) Tirer au hasard un entier tel que 0<λ<p;
2) Remplacer X0 par X^2*X0, Y0 par λ^3*Y0 et Z0 par λ*Z0;
3) Tirer au hasard un entier μ tel que 0<μ<p;
4) Remplacer X1 par μ^2*X1, Y1 par μ^3*Y1 et Z1 par μ*Z1 ;
5) Calcul de R=P+Q à l'aide de l'algorithme A.

Les variables manipulées au cours de l'exécution du procédé A' étant aléatoire, l'attaque DPA précédemment décrite ne s'applique plus. Dans ce paragraphe, on décrit la modification de l'algorithme de doublement de point d'une courbe elliptique définie sur le corps fini GF(2^n). La courbe elliptique est donc définie par l'équation suivante :

$$y^2+x*y=x^3+a*x^2+b$$

où a et b sont des paramètres appartenant au corps fini GF(2^n) fixés au départ. On définit c par l'équation :

$$c=b^{(2^{(n-2)})}.$$

Les coordonnées projectives du point Q=(X2,Y2,Z2) tel que Q=2.P avec P=(X1,Y1,Z1) sont calculées par le procédé suivant en 4 étapes. Dans chacune des étapes, les calculs sont effectués dans le corps fini GF(2^n).

1) Calculer Z2=X1*Z1^2;
2) Calculer X2=(X1+c*Z1^2)^4;
3) Calculer U=Z2+X1^2+Y1*Z1;
4) Calculer Y2=X1^4*Z2+U*X2.

Le procédé de la contre mesure consiste en une modification du procédé précédent. Le nouveau procédé de doublement de point d'une courbe elliptique définie sur le corps fini GF(2^n) consiste en les 6 étapes suivante

1) Tirer au hasard un élément non nul λ de GF(2^n) ;
2) Calculer X'1=λ^2*X1, Y'1=λ^3*Y1, Z'1=λ*Z1;
3) Calculer Z2=X'1*Z'1^2;
4) Calculer X2=(X'1+c*Z'1^2)^4;
5) Calculer U=Z2+X'1^2+Y'1*Z'1;
6) Calculer Y2=X'1^4*Z2+U*X2.

Plus généralement, le procédé de la contre mesure s'applique quelque soit le procédé (noté par la suite A) utilisé pour réaliser l'opération de doublement de point. Le procédé A est remplacé par le procédé A' en 3 étapes :
Entrée : un point P=(X1,Y1,Z1) représenté en coordonnées projectives.
Sortie : une point Q=(X2,Y2,Z2) représenté en coordonnés projectives tel que Q=2.P

1) Tirer au hasard un élément $\lambda$ non nul de GF($2^n$);

2) Calculer $X'_1=\lambda^2*X_1$, $Y'_1=\lambda^3*Y_1$, $Z'_1=\lambda*Z_1$,

$X'_1$, $Y'_1$ et $Z'_1$ définissent les coordonnées du point $P'=(X'_1,Y'_1,Z'_1)$;

3) Calcul de $Q=2 . P'$ à l'aide de l'algorithme A. Les variables manipulées au cours de l'exécution du procédé A' étant aléatoire, l'attaque DPA précédemment décrite ne s'applique plus.

Dans ce paragraphe, on décrit la modification de l'algorithme d'addition de point d'une courbe elliptique définie sur le corps fini GF($2^n$).

Les coordonnées projectives du point $R=(X_2, Y_2, Z_2)$ tel que $R=P+Q$ avec $P=(X_0, Y_0, Z_0)$ et $Q=(X_1, Y_1, Z_1)$ sont calculées par le procédé suivant en 12 étapes. Dans chacune des étapes, les calculs sont effectués dans le corps fini GF($2^n$).

1) Calculer $U_0=X_0*Z_1^2$;

2) Calculer $S_0=Y_0*Z_1^3$;

3) Calculer $U_1=X_1*Z_0^2$;

4) Calculer $S_1=Y_1*Z_0^3$;

5) Calculer $W=U_0+U_1$;

6) Calculer $R=S_0+S_1$;

7) Calculer $L=Z_0*W$;

8) Calculer $V=R*X_1+L*Y_1$;

9) Calculer $Z_2=L*Z_1$;

10) Calculer $T=R+Z_2$;

11) Calculer $X_2=a*Z_2^2+T*R+W^3$;

12) Calculer $Y_2=T*X_2+V*L^2$.

Le procédé de la contre mesure consiste en une modification du procédé précédent. Le nouveau procédé d'addition de point d'une courbe elliptique définie sur le corps fini GF($2^n$) consiste en les 14 étapes suivante

1) Tirer au hasard un élément $\lambda$ non nul de GF($2^n$);

2) Remplacer $X_0$ par $\lambda^2*X_0$, $Y_0$ par $\lambda^3*Y_0$ et $Z_0$ par $\lambda*Z_0$;

3) Tirer au hasard un élément $\mu$ non nul de GF($2^n$);

4) Remplacer $X_1$ par $\mu^2*X_1$, $Y_1$ par $\mu^3*Y_1$ et $Z_1$ par $\mu*Z_1$;

5) Calculer $U_0=X_0*Z_1^2$;

6) Calculer $S_0=Y_0*Z_1^3$;

7) Calculer $U_1=X_1*Z_0^2$;

8) Calculer $S_1=Y_1*Z_0^3$;

9) Calculer $W=U_0+U_1$;

10) Calculer $R=S_0+S_1$;

11) Calculer $L=Z_0*W$;

12) Calculer $V=R*X_1+L*Y_1$;

13) Calculer $Z_2=L*Z_1$;

14) Calculer $T=R+Z_2$;

15) Calculer $X_2=a*Z_2^2+T*R+W^3$;

16) Calculer $Y_2=T*X_2+V*L^2$;

Plus généralement, le procédé de la contre mesure s'applique quelque soit le procédé (noté par la suite A) utilisé pour réaliser l'opération d'addition de point. Le procédé A est remplacé par le procédé A' en 5 étapes :

Entrée : deux points $P=(X_0,Y_0,Z_0)$ et $Q=(X_1,Y_1,Z_1)$ représentés en coordonnées projectives.

Sortie : le point $R=(X_2,Y_2,Z_2)$ représenté en coordonnés projectives tel que $R=P+Q$

1) Tirer au hasard un élément non nul de GF($2^n$) ;

2) Remplacer $X_0$ par $\lambda^2*X_0$, $Y_0$ par $\lambda^3*Y_0$ et $Z_0$ par $\lambda*Z_0$;

3) Tirer au hasard un élément $\mu$ non nul de GF($2^n$);

4) Remplacer $X_1$ par $\mu^2*X_1$, $Y_1$ par $\mu^3*Y_1$ et $Z_1$ par $\mu*Z_1$;

5) Calcul de $R=P+Q$ à l'aide de l'algorithme A.

Les variables manipulées au cours de l'exécution du procédé A' étant aléatoire, l'attaque DPA précédemment décrite ne s'applique plus.

Le procédé de la contre mesure consiste également en la définition de 4 variantes dans l'opération de multiplication scalaire. L'opération de multiplication scalaire fait appel à l'opération de doublement de point noté Do et à l'opération d'addition de point noté Ad.

L'opération de doublement de point modifié décrite précédemment est notée Do' et l'opération d'addition de point modifiée décrite précédemment est notée Ad'.

Dans ce paragraphe on décrit la première variante de modification de l'opération de multiplication scalaire. La première variante consiste à rendre aléatoire la représentation d'un point au début du procédé de calcul. Dans le cas de l'utilisation de l'algorithme " double and add ", le procédé modifié de multiplication scalaire est le suivant en 5 étapes. Le procédé prend en entrée un point P et un entier d.

L'entier d est noté d=(d(t), d(t-1), ..., d(0)), où (d(t),d(t-1),...,d(0)) est la représentation binaire de d, avec d(t) le bit de poids fort et d(0) le bit de poids faible. L'algorithme retourne en sortie le point Q=d.P.

Cette première variante s'exécute, en cinq étapes :

> 1) Initialiser le point Q avec la valeur P ;
> 2) Remplacer Q par 2.Q en utilisant le procédé Do' ;
> 3) Si d(t-1)=1 remplacer Q par Q+P en utilisant le procédé Ad;
> 4) Pour 1 allant de t-2 à 0 exécuter :
> 4a) Remplacer Q par 2Q;
> 4b) Si d(i)=1 remplacer Q par Q+P;
> 5) Retourner Q.

Plus généralement, le procédé de la première variante décrit précédemment s'applique à l'opération de multiplication scalaire quelque soit le procédé (noté par la suite A) utilisé pour réaliser le calcul de la multiplication scalaire. Le procédé A fait appel aux opérations Do et Ad définies précédemment.

La première variante de la contre mesure consiste à remplacer la première opération Do par Do' définie précédemment.

La première variante permet donc d'assurer que les variables intermédiaires manipulées lors de l'opération de multiplication scalaire sont aléatoires. Cela rend l'attaque DPA précédemment décrite inapplicable.

Dans ce paragraphe on décrit la deuxième variante de modification de l'opération de multiplication scalaire. La deuxième variante consiste à rendre aléatoire la représentation d'un point au début du procédé de calcul et à la fin du procédé de calcul. Dans le cas de l'utilisation de l'algorithme " double and add ", le procédé modifié de multiplication scalaire est le suivant en 7 étapes. Le procédé prend en entrée un point P et un entier d

L'entier d est noté d=(d(t),d(t-1),..., d(0)), où (d(t), d(t-1), ..., d(0)) est la représentation binaire de d, avec d(t) le bit de poids fort et d(0) le bit de poids faible. L'algorithme retourne en sortie le point Q=d.P.

Cette seconde variante s'exécute en sept étapes :

> 1) Initialiser le point Q avec la valeur P ;
> 2) Remplacer Q par 2.Q en utilisant le procédé Do' ;
> 3) Si d(t-1)=1 remplacer Q par Q+P en utilisant le procédé Ad;
> 4) Pour i allant de t-2 à 1 exécuter :
>
> > 4a) Remplacer Q par 2Q;
> > 4b) Si d(1)=1 remplacer Q par Q+P;
>
> 5) Remplacer Q par 2.Q en utilisant le procédé Do';
> 6) Si d(0)=1 remplacer Q par Q+P en utilisant le procédé Ad;
> 7) Retourner Q.

Plus généralement, le procédé de la deuxième variante décrit précédemment s'applique à l'opération de multiplication scalaire quelque soit le procédé (noté par la suite A) utilisé pour réaliser le calcul de la multiplication scalaire. Le procédé A fait appel aux opérations Do et Ad définies précédemment. La deuxième variante de la contre mesure consiste à remplacer la première opération Do par Do' définie précédemment et la dernière opération Do par Do'.

La deuxième variante permet donc d'assurer que les variables intermédiaires manipulées lors de l'opération de multiplication scalaire sont aléatoires. L'avantage de la deuxième variante est une sécurité accrue contre des attaques DPA en fin d'algorithme de multiplication scalaire. En particulier, la deuxième variante rend l'attaque DPA précédemment décrite inapplicable.

Dans ce paragraphe, on décrit la troisième variante de modification de l'opération de multiplication scalaire.

La troisième variante consiste à rendre aléatoire la représentation de chacun des points manipulés au cours du procédé de multiplication scalaire. Dans le cas de l'utilisation de l'algorithme " double and add ", le procédé modifié de multiplication scalaire est le suivant en 4 étapes. Le procédé prend en entrée un point P et un entier d. L'entier d est noté d=(d(t), d(t-1),..., d(0)), où (d(t), d(t-1),...,d(0)) est la représentation binaire de d, avec d(t) le bit de poids fort et d(0) le bit de poids faible. L'algorithme retourne en sortie le point Q=d.P.

Cette troisième variante s'exécute en trois étapes:

1) Initialiser le point Q avec le point P;
2) Pour i allant de t-2 à 0 exécuteur :
2a) Remplacer Q par 2Q en utilisant le procédé Do';
2b) Si d(i)=1 remplacer Q par Q+P en utilisant le procédé Ad';
3) Retourner Q.

Plus généralement, le procédé de la troisième variante décrit précédemment s'applique à l'opération de multiplication scalaire quelque soit le procédé (noté par la suite A) utilisé pour réaliser le calcul de la multiplication scalaire. Le procédé A fait appel aux opérations Do et Ad définies précédemment.

La troisième variante de la contre mesure consiste à remplacer toutes les opérations Do par Do' et Ad par Ad'.

La troisième variante permet donc d'assurer que les variables intermédiaires manipulées lors de l'opération de multiplication scalaire sont aléatoires. L'avantage de la troisième variante par rapport à la deuxième variante est une sécurité accrue contre les attaques DPA sur les opérations intermédiaires du procédé de multiplication scalaire. En particulier, la troisième variante rend l'attaque DPA. précédemment décrite inapplicable.

Dans ce paragraphe on décrit la quatrième variante de modification de l'opération de multiplication scalaire. La quatrième variante consiste à rendre aléatoire la représentation de chacun des points manipulés au cours du procédé de multiplication scalaire. La quatrième variante est une modification de la troisième variante par l'utilisation d'un compteur, ledit compteur permettant de déterminer les étapes de l'algorithme de multiplication scalaire pour lesquelles la représentation d'un point est rendue aléatoire. On définit pour cela un paramètre de sécurité T. Dans la pratique on peut prendre T=5. Dans le cas de l'utilisation de l'algorithme " double and add ", le procédé modifié de multiplication scalaire est le suivant en 4 étapes. Le procédé prend en entrée un point P et un entier à.

L'entier d est noté d=(d(t),d(t-1),..., d(0)), où (d(t), d(t-1), ..., d(0)) est la représentation binaire de d, avec d(t) le bit de poids fort et d(0) le bit de poids faible. L'algorithme retourne en sortie le point Q=d.P.

La quatrième variante s'exécute en trois étapes:

1) Initialiser le point Q avec le point P
2) Initialiser le compteur co à la valeur T.
3) Pour i allant de t-1 à 0 exécuter
3a) Remplacer Q par 2Q en utilisant le procédé Do si co est différent de 0, sinon utiliser le procédé Do'.
3b) Si d(i)=1 remplacer Q par Q+P en utilisant le procédé Ad.
3c) Si co=0 alors réinitialiser le compteur co à la valeur T.
3d) Décrémenter le compteur co.
3) Retourner Q.

Plus généralement, le procédé de la troisième variante décrit précédemment s'applique à l'opération de multiplication scalaire quelque soit le procédé (noté par la suite A) utilisé pour réaliser le calcul de la multiplication scalaire. Le procédé A fait appel aux opérations Do et Ad définies précédemment.
La variante de la troisième contre mesure consiste à initialiser un compteur co à la, valeur T. L'opération Do est remplacée par l'opération Do' si la valeur du compteur est égale à 0.

Après chaque exécution des opérations Do ou Do', le compteur est réinitialisé à la valeur T s'il a atteint la valseur 0 ; il est ensuite décrémenté.

La quatrième variante permet donc d'assurer que les variables intermédiaires manipulées lors de l'opération de multiplication scalaire sont aléatoires. L'avantage de la quatrième variante par rapport à la troisième variante est une plus grande rapidité d'exécution. La quatrième variante rend l'attaque DPA précédemment décrite inapplicable.

L'application de l'une des 4 variantes précédemment décrite permet donc de protéger tout algorithme cryptographique basé sur les courbes elliptiques contre l'attaque de type DPA précédemment décrite.

## Revendications

**1.** Procédé de contre-mesure dans un composant électronique mettant en oeuvre un algorithme de cryptographie à clé publique de type courbe elliptique en utilisant la représentation des points de ladite courbe elliptique en coordonnées projectives consistant à représenter un point P de la courbe elliptique par les coordonnées (X, Y, Z) telles que x=X/Z^2 et y=Y/Z^3, x et y étant les coordonnées du point de la courbe elliptique en coordonnées affines, ladite courbe comprenant n éléments et étant définie sur un corps fini GF(p), p étant un nombre premier, ladite courbe ayant pour équation y^2=x^3+a*x+b, ou définie sur un corps fini GF(2^n), ladite courbe ayant pour équation y^2+x*y=x^3+a*x^2+b, où a et b sont des paramètres entiers fixés au départ, ledit procédé choisissant un représentant entier aléatoire parmi n éléments possibles en coordonnées projectives de la courbe elliptique et consistant en une modification de l'opération de doublement de points, d'addition desdits points et de l'opération de multiplication scalaire, **caractérisé en ce que** le procédé de la contre mesure s'applique quelque soit le procédé ou l'algorithme, noté par la suite A, utilisé pour réaliser l'opération de doublement de point, le procédé A étant remplacé par le procédé A' en 3 étapes, en utilisant une entrée définie par un point P=(X1,Y1,Z1) représenté en coordonnées projectives et une sortie définie par un point Q=(X2,Y2,Z2) représenté en coordonnés profectives tel que Q=2.p, de la courbe elliptique, lesdites étapes étant:

1) Tirer au hasard un entier $\lambda$ tel que $0<\lambda<p$;
2) Calculer X'1=$\lambda$^2*X1, Y'1=$\lambda$^3*Y1 et Z'1=$\lambda$*Z1, X'1, Y'1 et Z'1 définissant les coordonnées du point P'= (X'1,Y'1,Z'1);
3) Calculer Q=2*p' à l'aide de l'algorithme A.

2. procédé de contre-mesure selon la revendication 1 **caractérisé en ce que** l'algorithme de doublement de points, ou opérations de doublement de points d'une courbe elliptique défini sur ledit corps fini GF (p) s'effectue en huit étapes:

1) Tirer au hasard un entier $\lambda$ tel que $0<\lambda<p$;
2) Calculer X'1=$\lambda$^2*X1, Y'1=$\lambda$^3*Y1 et Z'1=$\lambda$*Z1;
3) Calculer M=3*X'1^2*a*Z'1^4;
4) Calculer Z2=2*Y'1*Z'1;
5) Calculer S=4*X'1*Y'1^2;
6) Calculer X2=M^2-2*S;
7) Calculer T=8*Y'1^4;
8) Calculer Y2=M*(S-X2)-T.

3. Procédé de contre-mesure selon la revendication 1 **caractérisé en ce que** plus généralement le procédé de la contre-mesure s'applique quelque soit le procédé ou l'algorithme noté par la suite A utilisé pour réaliser l'opération d'addition de points sur une courbe elliptique défini sur ledit corps fini GF(p) et s'effectue en cinq étapes :

1) Tirer au hasard un élément $\lambda$ non nul de GF(2^n) ;
2) Remplacer X0 par $\lambda$^2*X0, Y0 par $\lambda$^3*Y0 et Z0 par $\lambda$*Z0 ;
3) Tirer au hasard un élément $\mu$ non nul de GF(2^n) ;
4) Remplacer X1 par $\mu$^2*X1, Y1 par $\mu$^3*Y1 et Z1 par $\mu$*Z1;
5) Calcul de R=P+Q à l'aide de algorithme A. avec P= $(X_0, Y_0, Z_0)$ et Q = $(X_1, Y_1, Z_1)$.

4. Procédé de contre-mesure selon la revendication 1 **caractérisé en ce que** la modification de l'algorithme d'addition de point d'une courbe elliptique définie sur le corps fini GF(p), où p est un nombre premier, est la suivante: les coordonnées projectives du point R=(X2,Y2,Z2) tel que R=P+Q avec P=(X0,Y0,Z0) et Q= (X1, Y1, Z1) sont calculées par le procédé suivant en 16 étapes, dans chacune des étapes, les calculs étant effectués modulo p:

1) Tirer au hasard un entier $\lambda$ appartenant audit corps fini GF (p) tel que $0<\lambda<P$;
2) Remplacer X0 par $\lambda$^2*X0,Y0 par $\lambda$^3*Y0 et Z0 par $\lambda$ Z0;
3) Tirer au hasard un entier $\mu$ appartenant à tel que $0<\mu<p$;
4) Remplacer X1 par $\mu$^2*X1, Y1 par $\mu$^3*Y1 et Z1 par $\mu$*Z1;
5) Calculer U0=X0*Z1.^2;
6) Calcule S0=Y0*Z1^3;
7) Calculer U1=X1*Z0^2;
8) Calculer S1=Y1*Z0^3;
9) Calculer W=U0-U1;
10) Calculer R=S0-S1;
11) Calculer T=U0+U1;
12) Calculer M=S0+S1;

13) Calculer Z2=Z0*Z1*W;
14) Calculer X2=R^2-T*W^2;
15) Calculer V=T*W^2-2*X2;
16) Calculer 2*Y2=V*R-M*W^3.

**5.** Procédé de contre-mesure selon la revendication 1 **caractérisé en ce que** plus généralement, la modification de l'algorithme de doublement de point d'une courbe elliptique définie sur le corps fini GF(2^n), où n est un nombre premier, est la suivante: les coordonnées projectives du point $P=(X_1,Y_1,Z_1)$ tel que R=P+Q et Q=(X2,Y2,Z2) sont calculées par le procédé suivant en 3 étapes, dans chacune des étapes, les calculs étant effectués modulo p:

1) Tirer au hasard un élément $\lambda$ non nul de GF(2^n);
2) Calculer X'1=$\lambda$^2*X1, Y'1=$\lambda$^3*Y1, Z'1=$\lambda$*Z1, X'1. Y'1 et Z'1 définissent les coordonnées du point P'= (X'1,Y'1,Z'1);
3) Calcul de Q=2.P' à l'aide de l'algorithme A.

**6.** Procédé de contre-mesure selon la revendication 1 **caractérisé en ce que** le procédé de la contre mesure consiste en une modification du procédé précédent, le procédé de doublement de point d'une courbe elliptique étant définie sur le corps fini GF(2^n), et consiste en les 6 étapes suivantes :

1) Tirer au hasard un élément non nul $\lambda$ de GF(2^n);
2) Calculer X'1=$\lambda$^2*X1, Y'1=$\lambda$^3*Y1, Z'1=$\lambda$*Z1;
3) Calculer Z2=X'1*Z'1^2;
4) Calculer X2=(X'1+c*Z'1^2)^4;
5) Calculer U=Z2+X'1^2+Y'1*Z'1;
6) Calculer Y2=X'1^4*Z2+U*X2.

**7.** Procédé de contre-mesure selon la revendication 1 **caractérisé en ce que** plus généralement, la modification de l'algorithme d'addition que point d'une courbe elliptique définie sur le corps fini GF(2^n), ou n est un nombre premier, est la suivante: les coordonnées projectives du point P=(X0,Y0,Z0) et Q=(X1,Y1,Z2) en entrée et R=(X2,Y2,Z2) sont calculées par le procédé suivant en 5 étapes, dans chacune des étapes, les calculs étant effectués modulo:

1) Tirer au hasard un élément $\lambda$ non nul de GF(2^n) ;
2) Remplacer X0 par 7^2*X0, Y0 par $\lambda$^3*Y0 et Z0 par $\lambda$*Z0;
3) Tirer au hasard un élément $\mu$ non nul de GF(2^n) ;
4) Remplacer X1 par $\mu$^2*X1, Y1 par $\mu$^3*Y1 et Z1 par $\mu$*Z1 ;
5) Calcul de R=P+Q à l'aide de l'algorithme A.

**8.** Procédé de contre-mesure selon la revendication 1 **caractérisé en ce que** le procédé de la contre mesure consiste en une modification du procédé d'addition de points d'une courbe elliptique définie sur le corps fini GF(2^n) et consiste en les 16 étapes suivantes :

1) Tirer au hasard un élément $\lambda$ non nul de GF(2^n) ;
2) Remplacer X0 par $\lambda$^2*X0, Y0 par $\lambda$^3*Y0 et Z0 par $\lambda$*Z0 ;
3) Tirer au hasard un élément $\mu$ non nul de GF(2^n) ;
4) Remplacer X1 par $\mu$^2*X1, Y1 par $\mu$^Y1 et Z1 par $\mu$*Z1;
5) Calculer U0=X0*Z1^2;
6) Calculer S0=Y0*Z1^3;
7) Calculer U1=X1*Z0^2;
8) Calculer S1=Y1*Z0^3;
9) Calculer W=U0+U1;
10) Calculer R=S0+S1;
11) Calculer L=Z0*W;
12) Calculer V=R*X1+L*Y1;
13) Calculer Z2=L*Z1;
14) Calculer T=R+Z2;
15) Calculer X2=a*Z2^2+T*R+W^3;
16) Calculer Y2=T*X2+V*L^2;

**9.** Procédé de contre-mesure selon la revendication 1 **caractérisé en ce que** une première variante de modification de l'opération de multiplication scalaire consiste à rendre aléatoire la représentation d'un point au début du procédé de calcul par l'utilisation de l'algorithme " double and add ", le procédé modifié de multiplication scolaire est le suivant en 5 étapes, en prenant en entrée un point P et un entier d, l'entier d étant noté d=(d(t),d(t-1), ..., d(0)), où (d(t),d(t-1), ...,d(0)) est la représentation binaire de d, avec d(t) le bit de poids fort et d(0) le bit de poids faible, l'algorithme retournant en sortie le point Q=d.P, le procédé Do étant le procédé de doublement de points, le procédé Do' étant le procédé de doublement des points modifiés suivant l'une quelconque des revendications précédentes, cette première variante s'exécutant en cinq étapes;

    1) Initialiser le point Q avec la valeur P;
    2) Remplacer Q par 2.Q en utilisant le procédé Do' ;
    3) Si d(t-1)=1 remplacer Q par Q+P en utilisant le procédé Ad, le procédé Ad étant le procédé d'addition de points;
    4) Pour i allant de t-2 à 0 exécuter :

        4a) Remplacer Q par 2Q;
        4b) Si d(i) = 1 remplacer Q par Q+P;

    5) Retourner Q.

**10.** Procédé de contre-mesure selon la revendication 1 **caractérisé en ce que** une deuxième variante de l'opération de multiplication scalaire consiste à rendre aléatoire la représentation d'un point au début du procédé de calcul et à la fin du procédé de calcul, ceci dans le cas de l'utilisation de l'algorithme " double and add ",
le procédé modifié de multiplication scalaire étant le suivant en 7 étapes, prenant en entrée un point P et un entier d, l'entier d étant noté d=(d(t) ,d(t-1) ,..., d (0) ) , où (d(t),d(t-1) ,...,d(0)) est la représentation binaire de d, avec d(t) le bit de poids fort et d(0) le bit de poids faiblie, l'algorithme retournant en sortie le point Q=d. P, ladite seconde variante s'exécutant en sept étapes:

    1) Initialiser le point Q avec la valeur P;
    2) Remplacer Q par 2.Q en utilisant le procédé Do';
    3) Si d(t-1)=1 remplacer Q par Q+P en utilisant le procédé Ad;
    4) pour i allant de t-2 à 1 exécuter :

        4a) Remplacer Q par 2Q;
        4b) Si d(i)=1 remplacer Q par Q+P;

    5) Remplacer Q par 2.Q en utilisant le procédé Do';
    6) Si d(0)=1 remplacer Q par Q+P en utilisant le procédé Ad;
    7) Retourner Q.

**11.** Procédé de contre-mesure selon la revendication 1 **caractérisé en ce que** une troisième variante de l'opération de multiplication scalaire s'exécute en trois étapes :

    1) Initialiser le point Q avec le point P;
    2) Pour i allant de t-2 à 0 exécuter :

        2a)Remplacer Q par 2Q en utilisant le procédé Do';
        2b) Si d(i) = 1 remplacer Q par Q+P en utilisant le procédé Ad', Ad' étant le procédé d'addition des points modifiés suivant les revendications précédentes;

    3) Retourner Q.

**12.** Procédé de contre-mesure selon la revendication 1 **caractérisé en ce que** la quatrième variante de l'opération de multiplication scalaire s'exécute en 3 étapes:

    1) Initialiser le point Q avec le point P
    2) Initialiser le compteur co à la valeur T
    3) Pour i allant de t-1 à 0 exécuteur :

3a) Remplacer Q par 2Q en utilisant le procédé Do si co est différent de 0, sinon utiliser le procédé Do'.
3b) Si d(i)=1 remplacer Q par Q+P en utilisant le procédé Ad.
3c) Si co=0 alors réinitialiser le compteur co à la valeur T.
3d) Décrémenter le compteur co.

4) Retourner Q.

**13.** Composant électronique, par exemple carte à puce, comportant des moyens pour mettre en oeuvre le procédé selon l'une quelconque des revendications précédentes.

## Claims

**1.** A jamming method in an electronic component implementing a public key cryptographic algorithm of the elliptic curve type using the representation of the points of said elliptic curve in projective coordinates consisting in representing a point P of the elliptic curve by the coordinates (X, Y, Z) so that $x=X/2^2$ and $y=Y/2^3$, x and y being the coordinates of the point of the elliptic curve in affine coordinates, said curve including n elements and being defined on a finite body GF(p), with p being a prime number, said curve having as an equation $y^2=x^3+a*x+b$, or being defined on a finite body GF($2^n$), said curve having as an equation $y^2+*y=x^3+a*x^2+b$, wherein a and b are initially defined integral parameters, said method selecting a random integral representative among n possible elements in projective coordinates of the elliptic curve and consisting of a modification of the point doubling operation or point addition operation and scalar multiplication addition, **characterised in that** the jamming method applies whatever the method or the algorithm subsequently indicated A, used for carrying out the point doubling operation, the method A being replaced by the method A' in 3 steps, by using an input defined by a point P=(X1, Y1, Z1) represented in projective coordinates and an output defined by a point Q=(X2, Y2, Z2) represented in projective coordinates, so that Q=2.P on the elliptic curve, said steps being as follows:

1) Draw at random an integer $\lambda$ so that 0<A<p;
2) Calculate X'1=A^2*X1, Y'1=A^3*Y1 and Z'1=X*Z1, X'1, Y'1 and Z'1 defining the coordinates of the point P'=(X'1, Y'1, Z'1);
3) Calculate Q=2*P' using the A algorithm.

**2.** A jamming method according to claim 1, **characterised in that** the algorithm doubling the points or the operations doubling the points of an elliptic curve defined on said finite body GF(p) is carried out in eight steps:

1) Draw at random an integer $\lambda$ so that O<X<p;
2) Calculate X'1=$\lambda$^2*X1, Y'1=$\lambda$^3*Y1 and Z'1=X*Z1 ;
3) Calculate M=3*X'1^2+a*2'1^4;
4) Calculate Z2=2*Y'1*Z'1;
5) Calculate S=4*X'1*Y'1^2;
6) Calculate X2=M^2-2*S;
7) Calculate T=8*Y'1^4;
8) Calculate Y2=M* (S-X2) -T.

**3.** A jamming method according to claim 1, **characterised in that**, more generally, the jamming method applies whatever the method or the algorithm subsequently indicated A used to carry out the operation adding the points of an elliptic curve defined on said finite body GF(p) and is carried out in five steps:

1) Draw at random a nonzero element $\lambda$ of GF($2^n$);
2) Replace X0 with $\lambda$^2*X0, Y0 with $\lambda$^3*Y0 and Z0 with X*Z0;
3) Draw at random a nonzero element $\mu$ of GF($2^n$);
4) Replace X1 with $\mu$^2*X1, Y1 with $\mu$^3*Y1 and Z1 with $\mu$*Z1,
5) Calculation of R=P+Q using the A algorithm with P=(X0, Y0, Z0 and Q=(X1, Y1, Z1)

**4.** A jamming method according to claim 1, **characterised in that** the modification in the A algorithm adding the points of the elliptic curve defined on the finite body GF(p), where p is a prime number, is as follows: the projective coordinates of the point R=(X2, Y2, Z2) so that R=P+Q with P=(X0, Y0, Z0) and Q=(X1, Y1, Z1) are calculated using the following method in 16 steps, in each step the calculations being carried out modulo p:

1) Draw at random an integer $\lambda$ belonging to said finite body GF(p) so that $O<X<p$;

2) Replace X0 with $\lambda^2*X0$, Y0 with $X^3*Y0$ and Z0 with $\lambda*Z0$;

3) Draw at random an integer $\mu$ belonging to said finite body so that $0<\mu<p$;

4) Replace X1 with $\mu^2*X1$, Y1 with $\mu^3*Y1$ and Z1 with $\mu*Z1$;

5) Calculate $U0=X0*Z1^2$;

6) Calculate $S0=Y0*Z1^3$;

7) Calculate $U1=X1*Z0^2$;

8) Calculate $S1=Y1*Z0^3$;

9) Calculate $W=U0-U1$;

10) Calculate $R=S0-S1$;

11) Calculate $T=U0+U1$;

12) Calculate $M=S0+S1$;

13) Calculate $Z2=Z0*Z1*W$;

14) Calculate $X2=R^2-T*W^2$;

15) Calculate $V=T*W^2-2*X2$;

16) Calculate $2*Y2=V*R-M*W^3$.

5. A jamming method according to claim 1, **characterised in that**, more generally, the modification of the algorithm doubling the points of an elliptic curve defined on the finite body GF($2^n$), where n is a prime number is as follows: the projective coordinates of the point P=(X1, Y1, Z1) so that R=P+Q and Q=(x2, Y2, Z2) are calculated using the following method in 3 steps, in each step the calculations being carried out modulo p:

1) Draw at random a nonzero element $\lambda$ of GF($2^n$);

2) Calculate $X'1=X^2*X1$, $Y'1=\lambda^3*Y1$ and $Z'1=\lambda*Z1$, X'1, Y'1 and Z'1 defining the coordinates of the point P'= (X'1, Y'1, Z'1);

3) Calculation of Q=2.P' using the A algorithm.

6. A jamming method according to claim 1, **characterised in that** the jamming method consists of a modification of the previous method, the method of doubling a point of an elliptic curve being defined on the finite body GF($2^n$) and consisting of the following 6 steps:

1) Draw at random a nonzero element $\lambda$ of GF($2^n$);

2) Calculate $X'1=\lambda^2*X1$, $Y'1=\lambda^3*Y1$ and $Z'1=\lambda*Z1$;

3) Calculate $Z2=X'1*Z'1^2$;

4) Calculate $X2=(X'1+c*Z'1^2)^4$;

5) Calculate $U=Z2+X'1^2+Y'1*Z'1$;

6) Calculate $Y2+X'1^4*Z2+U*X2$.

7. A jamming method according to claim 1, **characterised in that**, more generally, the modification of the algorithm doubling the points of an elliptic curve defined on the finite body GF($2^n$), wherein n is a prime number is as follows: the projective coordinates of the point P=(X0, Y0, Z0) and Q=(X1, Y1, Z1) as an input and R=(X2, Y2, Z2) are calculated with the following method in 5 steps, in each step the calculations being carried out modulo:

1) Draw at random a nonzero element $\lambda$ of GF($2^n$);

2) Replace X0 with $X^2*X0$, Y0 with $X^3*Y0$ and Z0 with $\lambda*Z0$;

3) Draw at random a nonzero element $\mu$ of GF($2^n$);

4) Replace X1 with $\mu^2*X1$, Y1 with $\mu^3*Y1$ and Z1 with $\mu*Z1$;

5) Calculation of R=P+Q using the A algorithm.

8. A jamming method according to claim 1, **characterised in that** the jamming method consists of a modification of the method adding the points of an elliptic curve defined on the finite body GF($2^n$) and consists in the following 16 steps:

1) Draw at random a nonzero element $\lambda$ of GF($2^n$);

2) Replace X0 with $\lambda^2*X0$, Y0 with $\lambda^3*Y0$ and Z0 with $\lambda*Z0$;

3) Draw at random a nonzero element $\mu$ of GF($2^n$)

4) Replace X1 with $\mu^2*X1$, Y1 with $\mu^3*Y1$ and Z1 with $\mu*Z1$;

5) Calculate $U0=X0*Z1^2$;

6) Calculate S0=Y0*Z1^3;
7) Calculate U1=X1*Z0^2;
8) Calculate S1=Y1*Z0^3;
9) Calculate W=U0+U1;
10) Calculate R=S0+S1;
11) Calculate L=Z0*W;
12) Calculate V=R*X1+L*Y1;
13) Calculate Z2=L*Z1;
14) Calculate T=R+Z2;
15) Calculate X2=a*Z2^2+T*R+W^3;
16) Calculate Y2=T*X2+V*L^2;

9. A jamming method according to claim 1, **characterised in that** a first variant of the modification of the scalar multiplication operation consists in randomizing the representation of a point at the beginning of the calculation method with the utilization of the "double and add" algorithm, the modified scalar multiplication method is as follows in 5 steps, taking as an input a point P and an integer d, the integer d being noted d=(d(t), d(t-1), ..., d(0)), wherein (d(t), d(t-1), ..., d(0)) is the binary representation of d, with d(t) being the most significant bit and d(0) the least significant bit, the algorithm returning as an output the point Q=d.p, the method Do being the method doubling the points, the method Do' being the method doubling the modified points according to any one of the preceding claims, with this first variant being executed in five steps:

1) Set the point Q on the value P;
2) Replace Q with 2.Q using the method Do';
3) If d(t-1)=1, replace Q with Q+P using the method Ad, with the method Ad being the method doubling the points;
4) For i between t-2 and 0 execute:
4a) replace Q with 2Q;
4b) if d(i)=1, replace Q with Q+P;
5) Return Q.

10. A jamming method according to claim 1, **characterised in that** the second variant of the scalar multiplication operation consists in randomizing the representation of a point at the beginning of the calculation method and at the end of the calculation method in the case where the "double and add" algorithm is used, the modified scalar multiplication method being as follows in 7 steps, taking as an input a point p and an integer d, with the integer d being noted d=(d(t), d(t-1), ..., d(0)), where (d(t), d(t-1), ..., d(0)) is the binary representation of d, with d(t) being the most significant bit and d(0) the least significant bit, the algorithm returning as an output the point Q=d.P, said second variant being carried out in seven steps:

1) Set the point Q on the value P;
2) Replace Q with 2.Q using the method Do';
3) If d(t-1)=1, replace Q with Q+P using the method Ad;
4) For i between t-2 and 1 execute:
4a) Replace Q with 2Q;
4b) If d(i)=1 replace Q with Q+P;
5) Replace Q with 2.Q using the method Do';
6) If d(0)=1 replace Q with Q+P using the method Ad;
7) Return Q.

11. A jamming method according to claim 1, **characterised in that** a third variant of the scalar multiplication operation is carried out in three steps:

1) Set the point Q with the point P;
2) For i between t-2 and 0 execute:
2a) Replace Q with 2Q using the method Do';
2b) If d(i)=1, replace Q with Q+P using the method Ad', with Ad' being the method adding the modified points according to the preceding claims;
3) Return Q.

12. A jamming method according to claim 1, **characterised in that** the fourth variant of the scalar multiplication operation is carried out in 3 steps:

1) Set the point Q with the point P
2) Set the counter co on the value T
3) For i between t-1 and 0 execute:
3a) Replace Q with 2Q using the method Do if co is different from 0, or if not so, use the method Do';
3b) If d(i)=1 replace Q with Q+P using the method Ad;
3c) If co=0 then reset the counter co on the value T;
3d) Decrement the counter co.
4) Return Q.

**13.** An electronic component, for example, a chip card including means for implementing the method according to anyone of the preceding claims.

**Patentansprüche**

**1.** Gegenmaßnahmenverfahren in einer elektronischen Komponente, die einen kryptographischen Algorithmus mit öffentlichem Schüssel vom Typ elliptische Kurve unter Heranziehung der Darstellung der Punkte der genannten elliptischen Kurve in projektiven Koordinaten umsetzt, die darin besteht, einen Punkt P der elliptischen Kurve durch die Koordinaten (X, Y, Z) wie z. B. x=X/Z^2 und y=Y/Z''3, darzustellen, wobei x und y die Koordinaten des Punktes der elliptischen Kurve als affine Koordinaten sind, wobei die genannte Kurve n Elemente umfasst und auf einem fertigen Körper GF(p) definiert ist, wobei p eine Primzahl ist, wobei die genannte Kurve die Gleichung hat y^2=x^3+a*x+b, oder auf einem fertigen Körper GF(2^n) definiert ist, wobei die genannte Kurve die Gleichung hat y^2+x*y=x^3+a*x^2+b, in der a und b zu Beginn festgelegte ganze Parameter sind, wobei das genannte Verfahren einen zufälligen ganzen Platzhalter aus n möglichen Elementen aus projektiven Koordinaten der elliptischen Kurve wählt, die aus einer Modifikation der Punktverdopplungsoperation, der Addition der genannten Punkte und der skalaren Multiplikationsoperation bestehen, **dadurch gekennzeichnet, dass** das Gegenmaßnahmenverfahren unabhängig von dem im Anschluss mit A bezeichneten Verfahren oder Algorithmus angewendet wird, das zur Realisierung der Punktverdopplungsoperation herangezogen wird, wobei das Verfahren A durch das Verfahren A' in 3 Stufen unter Verwendung einer Eingabe ersetzt wird, die von einem Punkt P=(X1,Y1,Z1) definiert wird, der in projektiven Koordinaten dargestellt wird, und einem Ausgang, der von einem Punkt Q=(X2,Y2,Z2) definiert wird, der in projektiven Koordinaten, wie z. B. Q=2.P, der elliptischen Kurve dargestellt wird, wobei die genannten Stufen folgendermaßen sind:

1) Nach dem Zufallsprinzip eine ganze Zahl auswählen, $\lambda$ wie z. B. O<$\lambda$<p;
2) X'1=$\lambda$^2*X1, Y'1=$\lambda$^3*Y1 und Z'1=$\lambda$*Z1, X'1, Y'1 und Z'1) berechnen, die die Koordinaten des Punktes P'=(X'1,Y'1,Z'1) definieren;
3) Q2*P' mithilfe des Algorithmus A berechnen.

**2.** Gegenmaßnahmeverfahren gemäß Anspruch 1, **dadurch gekennzeichnet, dass** der Punktverdopplungsalgorithmus oder die Punktverdopplungsoperationen einer auf dem fertigen Körper GP(p) definierten elliptischen Kurve in acht Stufen erfolgt:

1) Nach dem Zufallsprinzip eine ganze Zahl $\lambda$ auswählen,wie z. B. O<$\lambda$<p;
2) X$^1$1=$\lambda$^2*X1,Y'1=$\lambda$^3*Y1 und Z'1=$\lambda$*Z1 berechnen;
3) M=3*X'1^2+a*Z'1^4 berechnen;
4) Z2=2*Y'1*Z'1 berechnen;
5) S=4*X' 1*Y'1^2 berechnen;
6) X2=M^2-2*S berechnen;
7) T=8*Y'1^4 berechnen;
8) Y2=M*(S-X2)-T berechnen.

**3.** Gegenmaßnahmenverfahren gemäß Anspruch 1, **dadurch gekennzeichnet, dass** ganz allgemein das Gegenmaßnahmenverfahren unabhängig von dem im Anschluss mit A bezeichneten Verfahren oder Algorithmus bezeichneten, zur Realisierung der Punktadditionsoperation auf einer elliptischen Kurve angewendet wird, die auf dem genannten fertigen Körper GF(p) definiert wird, und das in fünf Stufen erfolgt:

1) Nach dem Zufallsprinzip ein Element λ ungleich Null von GF(2^n) auswählen;

2) XO durch X**^λ*X0**, YO durch λ^3*Y0 und ZO durch λ*20 ersetzen;

3) Nach dem Zufallsprinzip ein Element μ ungleich Null von GF(2n) auswählen;

4) X1 durch μ^2*X1, Y1 durch *^3*Y1 und Z1 durch μ*Z1 ersetzen,

5) Aus R=P+Q mithilfe des Algorithmus A, mit P = (X0, Y0, Z0) und Q = (X1, Y1, Z1) berechnen

**4.** Gegenmaßnahmeverfahren gemäß Anspruch 1, **dadurch gekennzeichnet, dass** die Modifikation des Punktadditionsalgorithmus einer elliptischen Kurve, die auf dem fertigen Körper GF(p) definiert ist, bei dem p eine Primzahl ist, folgendermaßen lautet: die projektiven Koordinaten des Punktes R=(X2,Y2,Z2), wie z. B. R=P+Q mit P. (X0, Y0, 20) und Q=(X1, Y1, Z1) werden durch das folgende Verfahren in 16 Stufen berechnet, wobei in jeder Stufe die Berechnungen modulo p durchgeführt werden:

1) Nach dem Zufallsprinzip eine ganze Zahl λ auswählen, die zu dem fertigen Körper GF(p) gehört, wie z. B. 0<λ>p

2) X0 durch λ^2*X0, Y0 durch λ^3*Y0 und ZO durch λ ZO ersetzen;

3) Nach dem Zufallsprinzip eine ganze Zahl μ auswählen, wie z. B. zu O<μ<p gehört;

4) X1 durch μ^2*X1, Y1 durch μ^3*Y1 und Z1 durch μ*21 ersetzen;

5) U0=X0*Z1^2 berechnen;

6) SO=YO*Z1^3 berechnen;

7) U1=X1*Z0^2 berechnen;

8) S1=Y1*Z0^3 berechnen;

9) W=U0-U1 berechnen;

10) R=SO-S1 berechnen;

11) T=U0+U1 berechnen;

12) M=S0+S1 berechnen;

13) Z2=Z0*Z1*W berechnen;

14) X2=R^2-T*W^2 berechnen;

15) V=T+W^2-2*X2) berechnen

16) 2*Y2=V*R-M*W^3 berechnen.

**5.** Gegenmaßnahmeverfahren gemäß Anspruch 1, **dadurch gekennzeichnet, dass** ganz allgemein die Modifikation des Punktverdoppelungsalgorithmus einer elliptischen Kurve, die auf dem **fertigen** Körper GF(2^n) definiert wird, bei dem n eine Primzahl ist, folgendermaßen lautet: die projektiven Koordinaten des Punktes P=(X1,Y1,Z1), wie z. B. R=P+Q und Q=(X2,Y2,Z2) werden durch das folgende Verfahren in 3 Stufen berechnet, wobei in jeder Stufe die Berechnungen modulo p durchgeführt werden:

1) Nach dem Zufallsprinzip ein Element λ ungleich Null von GF(2^n) auswählen;

2) X'1=λ^2*X1, Y'1=λ^3*Y1, Z'1=1*Z1, X'1, Y'1 und Z'1 berechnen, die die Koordinaten des Punktes P'= (X'1, Y'1, Z'1) definieren;

3) Q=2.P' mithilfe des Algorithmus A berechnen.

**6.** Gegenmaßnahmenverfahren gemäß Anspruch 1, **dadurch gekennzeichnet, dass** das Gegenmaßnahmeverfahren in einer Modifikation des vorherigen Verfahrens besteht, wobei das Punktverdopplungsverfahren einer elliptischen Kurve auf dem fertigen Körper GF(2^n) definiert ist und aus den 6 folgenden Stufen besteht:

1) Nach dem Zufallsprinzip ein Element λ ungleich Null von GF(2^n) auswählen;

2) X'1=λ^2*X1, Y'1=λ^3*Y1, Z'1=λ*Z1 berechnen;

Z2-X'1*Z'1^2 berechnen;

X2=(X'1+c*Z'1^2)^4) berechnen;

U=Z2-X'1^2+Y'1*Z'1 berechnen;

Y2=X'1^4*Z2+U*X2 berechnen.

**7.** Gegenmaßnahme^nverfahren gemäß Anspruch 1, **dadurch gekennzeichnet, dass** ganz allgemein die Modifikation des Punktadditionsalgorithmus einer elliptischen Kurve, die auf dem fertigen Körper GF(2^np) definiert ist, bei dem n eine Primzahl ist, folgendermaßen lautet: die projektiven Koordinaten des Punktes P=(X0,YO,Z0) und Q=(X1,Y1,Z2) am Eingang und R=(X2,Y2,Z2), durch das folgende Verfahren in 5 Stufen berechnet werden, wobei in jeder Stufe die Berechnungen modulo durchgeführt werden;

1) Nach dem Zufallsprinzip 1 Element λ ungleich Null von GF(2^n) auswählen;
2) X0 durch λ^2*X0, YO durch λ^3*Y0 und ZO durch λ*Z0 ersetzen;
3) Nach dem Zufallsprinzip 1 Element p ungleich Null von Gp(2^n) auswählen;
4) X1 durch μ^2*X1, Y1 durch μ^3*Y1 und Z1 durch μ*Z1 ersetzen,

Berechnung von R=P+Q mithilfe des Algorithmus A.

8. Gegenmaßnahmenverfahren gemäß Anspruch 1, **dadurch gekennzeichnet, dass** das Gegenmaßnahmenverfahren aus einer Modifikation des Punktadditionsverfahrens einer elliptischen Kurve besteht, die auf dem fertigen Körper GF(2^n)definiert ist und aus den 16 folgenden Stufen besteht:

1) Nach dem Zufallsprinzip ein Element λ ungleich Null von GF(2^n) auswählen;
2) X0 durch λ^2*X0, YO durch λ^3*Y0 und ZO durch λ*Z0 ersetzen;
3) Nach dem Zufallsprinzip ein Element μ ungleich Null von GF(2^n) auswählen;
4) X1 durch μ^2*X1 ersetzen: Y1 durch μ^3*Y1 und Z1 durch μ*Z1;
5) U0=X0*Z1^2 berechnen;
6) S0=Y0*Z1^3 berechnen;
U1=X1*Z0^2 berechnen;
8) S1=Y1*Z0^3 berechnen;
9) W=UO+Ul berechnen;
10) R=S0+S1 berechnen
11) L=ZO*W berechnen;
12) V=R*X1+L*Y1 berechnen;
13) Z2=L*21 berechnen;
14) T=R+Z2 berechnen;
15) X2=a*Z2^2+T*R+W^3 berechnen;
16) Y2=T*X2+V*L^2 berechnen;

9. Gegenmaßnahmenverfahren gemäß Anspruch 1, **dadurch gekennzeichnet, dass** eine erste Modifikationsvariante der skalaren Multiplikationsoperation darin besteht, dass die Darstellung eines Punktes zu Beginn des Berechnungsverfahrens durch die Verwendung des Algorithmus "Double and Add" zufällig gemacht wird, das modifizierte skalare Multiplikationsverfahren in 5 Stufen wie folgt ist, indem am Eingang ein Punkt P und eine ganze Zahl d genommen werden, wobei die ganze Zahl mit d=(d(t), d(t-1),..., d(0)) notiert wird, wobei (d(t) d(t-1),..., d(0)) die binäre Darstellung von d ist, wobei d(t) das Bit mit hohem Gewicht und d(0) das Bit mit niedrigem Gewicht ist, wobei der Algorithmus am Ausgang den Punkt Q=d.P zurückgibt, wobei das Verfahren Do das Punktverdopplungsverfahren ist, wobei das Verfahren Do' das modifizierte Punktverdopplungsverfahren gemäß einem der vorherigen Ansprüche ist, wobei diese erste Variante in fünf Stufen ausgeführt wird:

1) Initialisierung des Punktes Q mit dem Wert P;
2) Ersatz von Q durch 2.Q durch Heranziehung des Verfahrens Do';
3) Wenn d(t-1)=1, Q durch Q+P unter Heranziehung des Verfahrens Ad ersetzen, wobei das Verfahren Ad das Punktadditionsverfahren ist;
4) Bei i von t-2 bis 0 ausführen:
4a) Q durch 2Q ersetzen;
4b) Wenn d(i)=1, Q durch Q+P ersetzen;
5) Q zurückgeben.

10. Gegenmaßnahmenverfahren gemäß Anspruch 1, **dadurch gekennzeichnet, dass** eine zweite Variante der skalaren Multiplikationsoperation darin besteht, dass die Darstellung eines Punktes zu Beginn des Berechnungsverfahrens und am Ende des Berechnungsverfahrens zufällig gemacht wird, und zwar im Falle der Heranziehung des Algorithmus "Double and Add", wobei das modifizierte skalare Multiplikationsverfahren in 7 Stufen wie folgt ist, indem am Eingang ein Punkt P und eine ganze Zahl d genommen werden, wobei die ganze Zahl mit d=(d(t), d (t-1),..., d(0)) notiert wird, wobei (d(t) d(t-1),..., d(0)) die binäre Darstellung von d ist, wobei d(t) das Bit mit hohem Gewicht und d(0) das Bit mit niedrigem Gewicht ist, wobei der Algorithmus am Ausgang den Punkt Q=d.P zurückgibt, wobei die genannte zweite Variante in sieben Stufen erfolgt:

1) Initialisierung des Punktes Q mit dem Wert P;
2) Ersatz von Q durch 2.Q durch Heranziehung des Verfahrens Do';

3) Wenn d(t-1) ˙=1, Q durch Q+P unter Verwendung des Verfahrens Ad ersetzen;
4) Bei i von t-2 bis 1 ausführen:
4a) Q durch 2Q ersetzen;
4b) Wenn d(i)=1, Q durch Q+P ersetzen;
5) Ersatz von Q durch 2.Q durch Heranziehung des Verfahrens Do
6) Wenn d(0)=1, Q durch Q+P unter Verwendung des Verfahrens Ad ersetzen;
7) Q zurückgeben.

**11.** Gegenmaßnahmenverfahren gemäß Anspruch 1, **dadurch gekennzeichnet, dass** eine dritte Variante der skalaren Multiplikationsoperation in drei Stufen ausgeführt wird:

1) Initialisierung des Punktes Q mit dem Punkt P;
2) Bei i von t-2 bis 0 ausführen:
2a) Ersatz von Q durch 2Q durch Heranziehung des Verfahrens Do';
2b) Wenn d(i)=1, Q durch Q+P unter Heranziehung de Verfahrens Ad' ersetzen, wobei Ad' das Additionsverfahren der modifizierten Punkte gemäß den vorherigen Ansprüchen ist;
3) Q zurückgeben.

**12.** Gegenmaßnahmenverfahren gemäß Anspruch 1, **dadurch gekennzeichnet, dass** die vierte Variante der skalaren Multiplikationsoperation in drei Stufen ausgeführt wird:

1) Initialisierung des Punktes Q mit dem Punkt P;
2) Initialisierung des Zählers co mit dem Wert T
3) Bei i von t-1 bis 0 ausführen:
3a) Q durch 2Q ersetzen und dabei das Verfahren Do heranziehen, wenn co unterschiedlich von 0 ist, andernfalls das Verfahren Do' heranziehen.
3b) Wenn d(i)=1, Q durch Q+P unter Heranziehung des Verfahrens Ad ersetzen.
3c) Wenn co=0, dann den Zähler co auf den Wert T reinitialisieren.
3d) Den Zähler co dekrementieren.
4) Q zurückgeben.

**13.** Elektronische Komponente, z. B. eine Chipkarte, die Zahlungsmittel enthält, um das Verfahren gemäß einem der vorherigen Ansprüche umzusetzen.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Elliptic curve cryptosystems and their implementation. *Journal of cryptology,* Septembre 1993, vol. 6 (4), 209-224